# EUROPEAN PATENT APPLICATION

(11) **EP 1 244 023 A2**
(43) Date of publication of application: **25.09.2002**
(21) Application number: 02006183.4
(22) Date of filing: 19.03.2002
(51) Int. Cl.: G06F 17/00

(54) **Method for configuring digital items**

(30) Priority: 23.03.2001 KR 2001015271; 18.05.2001 KR 2001027118
(71) Applicant: LG Electronics, Inc., Seoul (KR)
(72) Inventor: Chang, Do Im, Geumchun-gu, Seoul (KR); Song, Young Won, Songpa-gu, Seoul (KR); Park, Yong Chul, Seoul (KR)
(74) Representative: Vetter, Ewald Otto

(57) **Abstract**

The present invention relates to a definition of a DIGITAL ITEM, a data manipulation unit for electronic commerce activities such as generation, process, transaction, transmission, management, storage or usage of multimedia data.Especially, the method for configuring a new DIGITAL ITEM using a CHOICE and a SELECTION of DIGITAL ITEMs according to present invention helps the user to avoid making duplicate selection. Moreover, since a new DIGITAL ITEM is configured by using a CONDITION that enables to pick out a SELECTION more effectively, the present invention is very useful for improving the efficiency of comparison operation and the power of expression of the CONDITION.

## Description

### BACKGROUND OF THE INVENTION

### 1. Field of the Invention

The present invention relates to a definition of a DIGITAL ITEM as a unit of manipulation of multimedia data for electronic commerce activities such as generation, process, transaction, transfer, management, storage or usage of multimedia data.

More specifically, the present invention relates to a method for configuring a new DIGITAL ITEM using components of DIGITAL ITEMs, particularly a selection cluster (CHOICE) and a selection item (SELECTION).

The present invention also relates to a method for configuring a new DIGITAL ITEM using CONDITIONS to select the selection item (SELECTION) more effectively.

### 2. Description of the Related Art

As more people participate in activities associated with electronic commerce including generation, process, transaction, transfer, management, storage and usage of multimedia data, more flexible, consistent and compatible regulations on a multimedia data handling unit are required.

Especially, with the development of Internet, the volume of electronic commerce has been increased in the trading volume. Unfortunately, however no definition model has been yet set concerning the multimedia data handling unit for the electronic commerce. This appears to be a potential factor causing chaos in the electronic commerce in the near future.

Considering the above aspect of the electronic commerce environment, the international standard organization (ISO), especially MPEG-21 sub-group in the ISO/IEC SC29/WG11, is trying to define a DIGITAL ITEM and standardize more flexible, consistent and compatible DIGITAL ITEM, based on the correlation of the DIGITAL ITEM to a subject on the electronic commerce and its relevant technology, in full consideration of a relationship among every user of the electronic commerce business model (e.g., DIGITAL ITEM generator, supplier, distributor, consumer, intellectual property licensor, industrial property licensor, banking agent, electronic commerce supervisor, and so on).

Accordingly, a definition model of the DIGITAL ITEM is required to consider correlation of the subject (or user) of business model on the electronic commerce or its relevant technology as aforementioned, and to make the electronic commerce or transaction be performed regardless of different kind of network or terminal.

As a minimum unit of the multimedia data in the electronic commerce activities such as generation, process, transaction, transfer, management, storage, usage and so on of multimedia data, such definition model of the DIGITAL ITEM should be compatible, consistent and flexible.

Normally, as a basic unit of general handling activities including the generation, process, transaction, transfer, management, storage or usage of the multimedia contents which is worthy to be an intellectual property under wire/wireless environments, the DIGITAL ITEM is mainly composed of three components: a RESOURCE that corresponds to the content itself (for example, a movie with images and sounds or the music itself), a METADATA that describes the content and its usage (for example, title, genre, name of author and content outline of a movie or a music, or a usage condition and regulation of the content, etc.), and configuration components for the DIGITAL ITEM (for example, a selection cluster (CHOICE), a selection item (SELECTION), and a condition (CONDITION)).

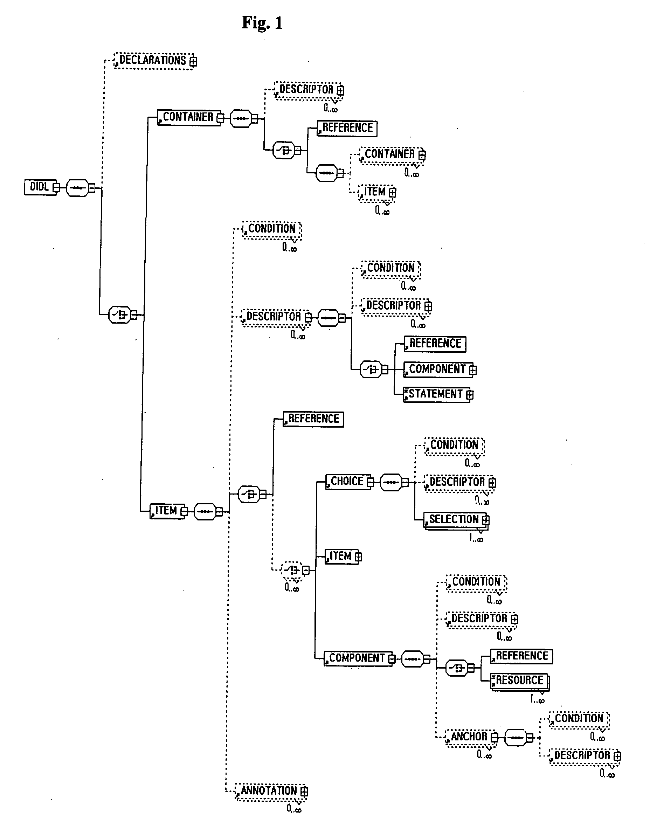

Figure 1 illustrates a description of a DIGITAL ITEM definition model.

As depicted in Figure 1, DIGITAL ITEM Definition Language (DIDL) is categorized into a DECLARATION, a CONTAINER, an ITEM, etc..

Here, the DIGITAL ITEMs have a hierarchical configuration that the DIGITAL ITEMs can be combined or already combined DIGITAL ITEMs can be recursively combined again.

Among others, a COMPONENT includes a RESOURCE that consists of audio, video, graphic or text, an ANCHOR that indicates the resources, and description information (DESCRIPTOR) that describes the COMPONENT. On higher layer of the COMPONENT, there is an ITEM as a high layer in the form of cluster including the COMPONENT or the ITEM. Similarly, there is a CONTAINER as a higher layer in the form of cluster including the ITEM or the CONTAINER.

Figure 1 shows that a DIGITAL ITEM can include another DIGITAL ITEM, and particularly a REFERENCE element that can access to externally stored DIGITAL ITEMs is defined in the DIGITAL ITEM.

And, the DIGITAL ITEM provides a mechanism that a user can configure the DIGITAL ITEM using the selection cluster (CHOICE) and the selection item (SELECTION).

Here, the CHOICE is a representative name of several SELECTIONS. The CONDITION embraces certain conditions for indicating validity of the CHOICE and its relevant SELECTION under particular situations.

Such DIGITAL ITEM can be bound with many previously generated DIGITAL ITEMs to generate a new DIGITAL ITEM (composite DIGITAL ITEM).

For example, image DIGITAL ITEMs can be combined together to generate a high layer DIGITAL ITEM, so called an 'ALBUM'. In this case, each image DIGITAL ITEM is an externally stored DIGITAL ITEM that exists in a form of an individual storing unit. In order for that new album DIGITAL ITEM to include those items, it should have a proper REFERENCE to access to them.

As described above, in a general DIGITAL ITEM generation method, if a newly generated DIGITAL ITEM is to embrace externally stored lower layer DIGITAL ITEMs, it should have reference information (REFERENCE) that gives an access to the lower layer DIGITAL ITEMs.

At this time, if the CHOICE and the SELECTION have the same content in the several lower layer DIGITAL ITEMs embraced, an application program has a problem that it has to interpret and process whole the contents of the CHOICE and the SELECTION that are included in all the lower layer DIGITAL ITEMs in order to make the user can execute the CHOICE with the same content only once. Therefore, the traditional DIGITAL ITEM definition model did not necessarily take full advantage of information of the METADATA.

Since CONDITION is closely related with configuration, how to represent the CONDITION more effectively is a key factor to the determination of the comparison operation's efficiency and the condition's power of expression. This explains why a more effective CONDITION expression method considering of comparative characteristic of a condition is required especially when the user wishes to configure a DIGITAL ITEM using the CONDITION.

### SUMMARY OF THE INVENTION

It is, therefore, an object of the present invention to provide a method for generating a DIGITAL ITEM that one or more problems with CHOICE and SELECTION among DIGITAL ITEM components due to limitations and disadvantages of the related art.

Another object of the present invention is to provide a method for configuring a new DIGITAL ITEM based on several DIGITAL ITEMs using the CHOICE and the SELECTION.

Still another object of the present invention is to provide a method for generating a DIGITAL ITEM that solves the problems with CONDITION among DIGITAL ITEM components.

Yet another object of the present invention is to provide a method for configuring a DIGITAL ITEM using the CONDITION that corresponds to a user determined precedence of the SELECTION.

To achieve the above object, there is provided a method for configuring a DIGITAL ITEM, which includes the steps of: describing a duplicate CHOICE among lower layer DIGITAL ITEMs together with linking information; defining at least one PRECEDENCE; and designating at least one CONDITION for searching a corresponding DIGITAL ITEM using at least one of the PRECEDENCE.

According to the DIGITAL ITEM configuration method described above, the linking information is linked to the SELECTION or the CHOICE of the low layer DIGITAL ITEMs. Preferably, the linking information could include the reference (EXT_ITEM_REFS) for referring to the lower layer DIGITAL ITEMs and the reference (EXT_SELECTION_REFS or EXT_CHOICE_REFS) for referring to any duplicate SELECTION or the CHOICE among the lower layer DIGITAL ITEMs.

In addition, the linking information can be the reference (OVERRIDE) for referring to the SELECTION or the CHOICE of the lower layer DIGITAL ITEMs.

The CONDITION in the DIGITAL ITEM configuration method aforementioned can be designated as one of 'GT (great)', 'GE (greater or equal)', 'EQ (equal)', 'LE (less or equal)', or 'LT (little)'.

Another preferred embodiment of the present invention provides a method for configuring a higher layer DIGITAL ITEM using a lower layer DIGITAL ITEM, which includes the steps of: describing the low layer DIGITAL ITEM information; describing a duplicate SELECTION among lower layer DIGITAL ITEMs; and describing linking information that links the lower layer DIGITAL ITEMs.

Preferably, the lower layer DIGITAL ITEM information can be described using REFERENCE.

Yet another preferred embodiment of the present invention provides a method for generating a DIGITAL ITEM, which includes the steps of: defining a PRECEDENCE for SELECTION; comparing a PRECEDENCE selected by a user with a CONDITION; selecting at least one DIGITAL ITEM or a COMPONENT that satisfies at least one of the CONDITIONS; and configuring a new DIGITAL ITEM using the selected DIGITAL ITEM or COMPONENT.

Preferably, the user can choose the SELECTION every time he or she selects the PRECEDENCE.

### BRIEF DESCRIPTION OF THE DRAWINGS

The foregoing and other objects and features of the present invention will become more fully apparent from the following description and appended claims, taken in conjunction with the accompanying drawings. Understanding that these drawings depict only typical embodiments of the invention and are, therefore not to be considered limiting of its scope, the invention will be described with additional specificity and detail through use of the accompanying drawings in which:
Figure 1 diagrammatically shows a structure of a DIGITAL ITEM definition model;
Figure 2 diagrammatically shows a first embodiment of CHOICE and SELECTION definition according to a method for generating a DIGITAL ITEM of the present invention;
Figure 3 diagrammatically shows a DIGITAL ITEM that is generated by using the definition language of the first embodiment of the present invention;
Figure 4 diagrammatically shows a second embodiment of CHOICE and SELECTION definition according to a method for generating a DIGITAL ITEM of the present invention;
Figure 5 diagrammatically shows a DIGITAL ITEM that is generated by using the definition language of the second embodiment of CHOICE and SELECTION definition of the present invention;
Figure 6 diagrammatically shows a first embodiment of CONDITION definition according to a method for generating a DIGITAL ITEM of the present invention;
Figure 7 diagrammatically shows a DIGITAL ITEM that is generated by using the definition language according to the first embodiment of CONDITION definition of the present invention;
Figure 8 diagrammatically shows a second embodiment of CONDITION definition according to a method for generating a DIGITAL ITEM of the present invention;
Figure 9 diagrammatically shows a DIGITAL ITEM that is generated by using the definition language according to the second embodiment of CONDITION definition of the present invention; and
Figure 10 is a flow chart explaining a method for generating a DIGITAL ITEM according to the present invention.

### DETAILED DESCRIPTION OF THE PREFERRED EMBODIMENT

Preferred embodiments of the present invention will now be described with reference to the accompanying drawings. In the following description, same drawing reference numerals are used for the same elements even in different drawings. The matters defined in the description are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

First of all, Figure 1 is a diagram showing a basic configuration of a DIGITAL ITEM definition model.

As shown in Figure 1, the DIGITAL ITEM can be defined by several kinds of components, including a selection cluster (CHOICE), and a selection item (SELECTION).

The CHOICE is a representative name for different kinds of SELECTION, and is configured with a condition (CONDITION) for indicating the validity of the CHOICE and other relevant SELECTION under particular situations, description information (DESCRIPTOR) for describing the CHOICE, and SELECTION.

In general, one CHOICE includes several SELECTIONs.

And, the SELECTION has a CONDITION that is required to make the SELECTION be selected and a DESCRIPTOR of the SELECTION. Each SELECTION has a selection ID (SELECT_ID), and the CONDITION for indicating the validity of the SELECTION under the particular conditions includes an ID reference (IDREFS) indicating the selection ID (SELECT_ID) of the SELECTION to designate the corresponding CONDITION as true.

One ITEM can embrace a plurality of CHOICE, and each CHOICE includes the CONDITION for indicating the validity of the corresponding CHOICE under the particular situations.

Based on the DIGITAL ITEM definition model described above, a high layer DIGITAL ITEM can be configured, that is, the high layer DIGITAL ITEM can be configured by using a plurality of lower layer DIGITAL ITEMs. For such case, the present invention provides two methods involving 'linking information' that brings the equivalent effect with the SELECTION of the corresponding lower layer DIGITAL ITEM when it is selected by the user, particularly as the user selects a particular SELECTION described by a higher layer DIGITAL ITEM to select a lower layer DIGITAL ITEM using a CHOICE that is newly described in the higher layer DIGITAL ITEM.

The linking information is described for the CHOICE and the SELECTION that are newly described for the higher layer DIGITAL ITEM. Sometimes, the linking information can be described as the reference that enables to refer to a lower layer DIGITAL ITEM including an equivalent SELECTION to the SELECTION including the linking information. The linking information is described as such reference when the reference is an external item reference (EXT_ITEM-REFS), an external choice reference (EXT_CHOICE_REFS), or an external selection reference (EXT_SELECTION_REFS). It is also possible when the linking information is the anyURI formatted information (OVERRIDE), that is, the anyURI for referring to a particular CHOICE and the SELECTION that belong to a particular external DIGITAL ITEM.

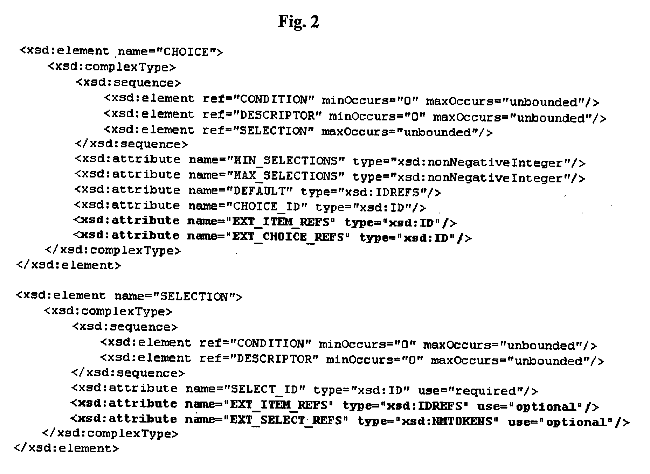

Figure 2 illustrates a first embodiment of a method for generating a DIGITAL ITEM according to the present invention. Figure 2 illustrates the definition of the CHOICE and the SELECTION as a part of DIGITAL ITEM definition language that is described with XML schema definition language.

In other words, it is the linking information that gives the same effect with the corresponding SELECTION of the low layer DIGITAL ITEM when the user selects a particular SELECTION described in the high layer DIGITAL ITEM. The SELECTION thereof includes the external item reference (EXT_ITEM_REFS), and the external selection reference (EXT_SELECT_REFS) attribute.

Preferably, the CHOICE includes the external item reference (EXT_ITEM_REFS), and the external selection reference (EXT_CHOICE_REFS) attribute.

Further, the external item reference (EXT_ITEM_REFS) of the SELECTION/CHOICE has an ID for each DIGITAL ITEM at a low layer (for example, ITEM1, ITEM2, ITEM3 and so forth) that includes an equivalent SELECTION/CHOICE to the corresponding SELECTION/CHOICE.

And, the external selection reference (EXT_SELECT_REFS) of the SELECTION has a selection ID (SELECT_ID) for referring to an equivalent SELECTION to the corresponding SELECTION of the low layer DIGITAL ITEMs. When the SELECTION is selected out of the current items (that is, a high layer item),SELECTIONs in a low layer to be selected are manifested by enumerating the selection IDs thereof (SELECT_ID) in the external selection reference (EXT_SELECT_REFS).

Similarly, the external choice reference (EXT_CHOICE_REFS) has choice IDs (CHOICE_ID) for referring to an equivalent CHOICE to the corresponding CHOICE of the low layer DIGITAL ITEMs.

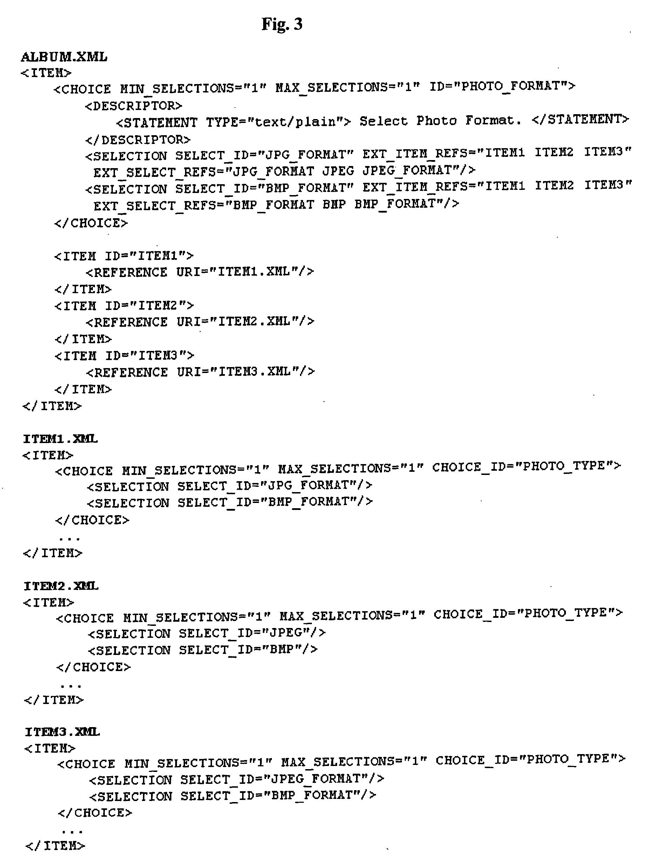

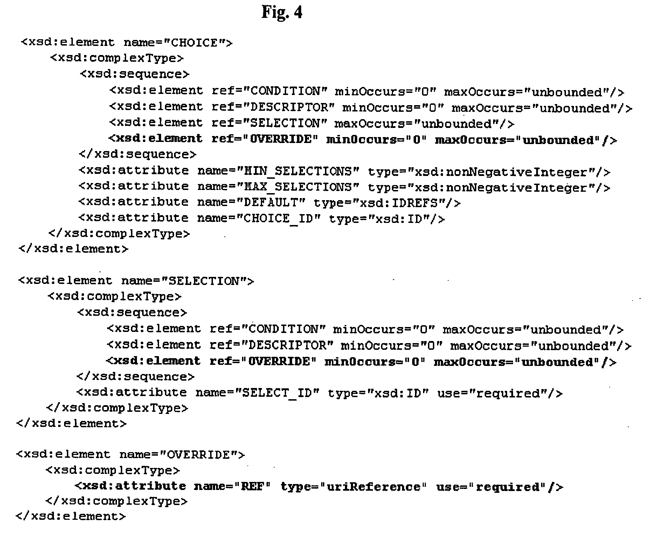

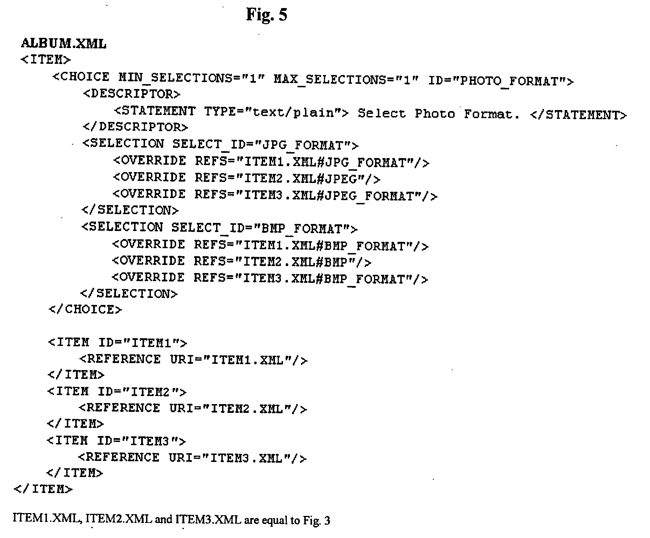

Figure 3 is a diagram illustrating a DIGITAL ITEM that is generated using the definition language in accordance with the first embodiment of Figure 2 of the present invention. For example, a high layer DIGITAL ITEM, 'ALBUM' is generated by configuring image DIGITAL ITEMs.

Here, ALBUM.XML is a high layer DIGITAL ITEM, and ITEM1.XML, ITEM2.XML, and ITEM3.XML are low layer DIGITAL ITEMs that belong to the high layer DIGITAL ITEM. The high layer DIGITAL ITEM and the low layer DIGITAL ITEMs, respectively, have a choice (CHOICE) that enable to choose an appropriate image format.

Especially in the DIGITAL ITEMs described in Figure 3, if the SELECTION of JPG_FORMAT is picked out among the CHOICE of the high layer DIGITAL ITEMs (i.e., SELECTION SELECT_ID="JPG_FORMAT"), JPG_FORMAT is selected out of the SELECTION of ITEM1 (in fact, ITEM1.XML), (i.e., SELECTION SELECT_ID="JPG_FORMAT"), JPEG is selected out of the SELECTION of ITEM2 (in fact, ITEM2.XML) (i.e., SELECTION SELECT_ID="JPEG"), and JPEG_FORMAT is selected out of the SELECTION of ITEM3 (in fact, ITEM3.XML) (i.e., SELECTIONSELECT_ID="JPEG_FORMAT"), respectively, by the external item reference (EXTJTEM_REFS) and the external selection reference (EXT_SELECT_REFS) (that is, EXT_SELECT_REFS="JPG_FORMAT JPEG JPEG_FORMAT", EXT_ITEM_REFS="ITEM1 ITEM2 ITEM3).

On the other hand, if BMP_FORMAT is chosen as the SELECTION out of the CHOICE of the high layer DIGITAL ITEMs, BMP_FORMAT is selected out of the SELECTION of ITEM1 (ITEM1.XML), BMP is selected out of the SELECTION of ITEM 2 (ITEM2.XML), and BMP_FORMAT is selected out of the SELECTION of ITEM3 (TEM3.XAL), respectively, by the external item reference (EXT_ITEM_REFS) and the external selection reference (EXT_SELECT_REFS). Here, the enumeration of the DIGITAL ITEM IDs and SELECTION are mapped at the one-to-one in order of the enumeration.

As shown in the Figures 2 and 3, if the condition of a particular SELECTION included in the high layer DIGITAL ITEM (ALBUM.XML) is designated as true (TRUE) by the user (SELECTION SELECT_ID="JPG_FORMAT" or SELECTION SELECT_ID="BMP_FORMAT), the condition of the corresponding SELECTION in the low layer DIGITAL ITEMs (e.g., ITEM1.XML, ITEM2.XML, and ITEM3.XML) is also designated as true by the linking information (the reference for referring to the low layer DIGITAL ITEMs including the same SELECTION and the SELECTION having the linking information, namely, EXT_SELECT_REFS, EXT_ITEM-REFS and so forth). In this way, when the user selects a particular SELECTION, the corresponding SELECTION of the lower DIGITAL ITEM yields the same effect as if it were selected by the user also.

Figure 4 diagrammatically illustrates a second embodiment of the definition of the CHOICE and the SELECTION in accordance with the method for generating a DIGITAL ITEM of the present invention. Figure 4 shows the definition of the CHOICE and the SELECTION as a part of DIGITAL ITEM definition language that is described with XML schema definition language.

Here, the SELECTION includes an arbitrary number of OVERRIDEs. The OVERRIDE has the anyURI type attributes. When a current DIGITAL ITEM includes the other DIGITAL ITEM by reference, the OVERRIDE is configured with a combination of the ID of included DIGITAL ITEM and the SELECTION IDs (SELECTION_ID) that are supposed to be selected out of the included DIGITAL ITEMs. In the meantime, the CHOICE also has an arbitrary number of the OVERRIDE, which is composed of a combination of the CHOICE ID (CHOICE_ID) of the included DIGITAL ITEM that are supposed to be configured with the same way to the CHOICE of the current DIGITAL ITEM and the ID of included DIGITAL ITEM.

Figure 5 diagrammatically shows a DIGITAL ITEM that is generated by using the definition language according to the second embodiment of the present invention illustrated in Figure 4 as above.

Similar to the first embodiment, Figure 5 illustrates a case in which a high layer DIGITAL ITEM, so called 'ALBUM', is generated by configuring image DIGITAL ITEMs.

Again, ALBUM.XML is a high layer DIGITAL ITEM, and ITEM1.XML, ITEM2.XML, and ITEM3.XML are low layer DIGITAL ITEMs that belong to the high layer DIGITAL ITEM as explained in Figure 3.

The high layer DIGITAL ITEM (ALBUM.XML) and the low layer DIGITAL ITEMs (ITEM1.XML, ITEM2.XML, and ITEM3.XML) include the CHOICE that enables to choose an appropriate image format.

Meanwhile, in the DIGITAL ITEMs which are described in Figure 5, if JPG_FORMAT is selected out of the CHOICE of the high layer DIGITAL ITEMs (SELECTION SELECT_ID="JPG_FORMAT"), JPG_FORMAT, a SELECTION of the ITEM1.XML, is picked out according to OVERRIDE REFS="ITEM1.XML#JPG_FORMAT, and JPEG, a SELECTION of the ITEM2.XMAL, is picked out according to OVERRIDE REFS="ITEM2.XML#JPEG, and JPEG_FORMAT, a SELECTION of the ITEM3.XMAL, is picked out according to OVERRIDE REFS="ITEM3.XML#JPEG_FORMAT.

If, on the other hand, a BMP_FORMAT is selected out of the CHOICE of the high layer DIGITAL ITEMs, BMP_FORMAT, a SELECTION of the ITEM1.XML, is picked out, and BMP, a SELECTION of the ITEM2.XML, is picked out, and BMP_FORMAT, a SELECTION of the ITEM3.XML, is picked out instead.

Next, the present invention provides two methods for generating a new DIGITAL ITEM using the CONDITION out of the DIGITAL ITEM definition models.

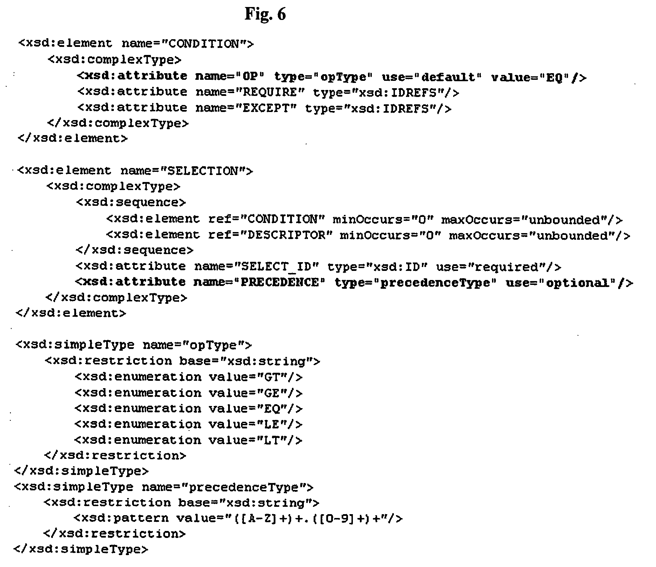

One of the definition methods is illustrated in Figure 6.

Figure 6 illustrates a case in which XML schema definition language is described as a part of the DIGITAL ITEM definition language. In the figure, the CONDITION, being an attribute, has OP (it is typed in bold). Here, the OP can compare GT (greater than), GE (greater than or equal to), EG (equal to), LE (less than or equal to), and LT (less than).

And, the PRECEDENCE, one of the attributes of the SELECTION, has a relative size or an objective size of a SELECTION that is supposed to be used for the comparison of the SELECTION IDs (SELECT_ID). Especially in Figure 6, having the PRECEDENCE as an attribute of the SELECTION is described (it is typed in bold).

The CONDITION of the present invention refers to the SELECTION, and it is designated as either true or false depending on the comparison of the SELECTION the user selected with the reference list of the CONDITION. Thus it should be noted that the CONDITION is not designated as available or not available (or same/different).

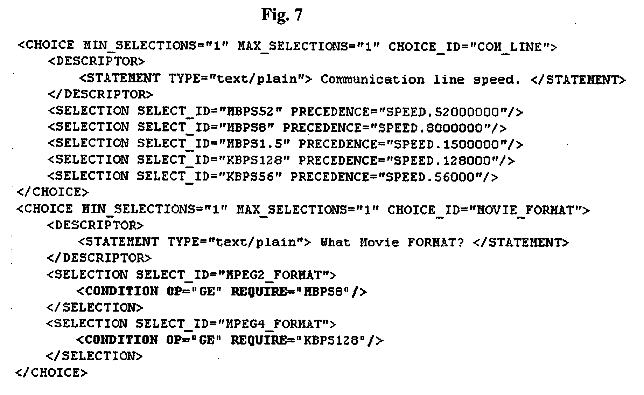

Figure 7 is a diagram illustrating an example of a DIGITAL ITEM that is generated by using the definition language introduced in the first embodiment of CONDITION definition (Figure 6) of the present invention.

Here, the first CHOICE indicates the communication speed of the user (...CHOICE_ID="COM_LINE"), and the second CHOICE indicates the video format (...CHOICE_ID="MOVIE_FORMAT").

Since the size of the communication speed of the user in the first CHOICE is comparable with others, it is defined with the PRECEDENCE, an attribute of the SELECTION.

For instance, SELECT_ID="MBPS52" PRECEDENCE="SPEED.52000000", or SELECT_ID="MBPS1.5" PRECEDENCE="SPEED.1500000" is one way to define the size of the communication speed of the user manifesting with the PRECEDENCE, one of the attributes of the SELECTION.

The second CHOICE embraces a video format as aforementioned. Its SELECTION varies depending on which SELECTION has been selected from the previous selection.

For example, if the user picked out "MBPS52", since the corresponding PRECEDENCE 52000000 is greater than 8000000 and 128000, both the MPEG2 format and the MPEG4 format can be selected. That is to say, based on <SELECTION SELECT_ID="MPEG2_FORMAT">, and <CONDITION OP="GE" REQUIRE="MBPS8"/>, the MPEG2 format can be selected at the PRECEDENCE greater than 8000000.

Similarly, based on <SELECTION SELECT_ID="MPEG4_FORMAT">, and <CONDITION OP="GE" REQUIRE="KBPS128"/>, the MPEG4 format can be selected at the PRECEDENCE greater than 128000.

However, if the user picked out "MBTS1.5", the corresponding PRECEDENCE 1500000 is less than 8000000, the MPEG2 format cannot be selected. On the other hand, since the PRECEDENCE 1500000 is greater than 128000, the MPEG4 format can be selected.

To be short, because of <SELECTION SELECT_ID="MPEG2_FORMAT">, and <CONDITION OP="GE" REQUIRE="MBPS8"/>, the MPEG2 format can be selected at the PRECEDENCE greater than 8000000 only.

And, because of <SELECTION SELECT_ID="MPEG4_FORMAT">, and <CONDITION OP="GE" REQUIRE="KBPS128"/>, the MPEG4 format can be selected at the PRECEDENCE greater than 128000.

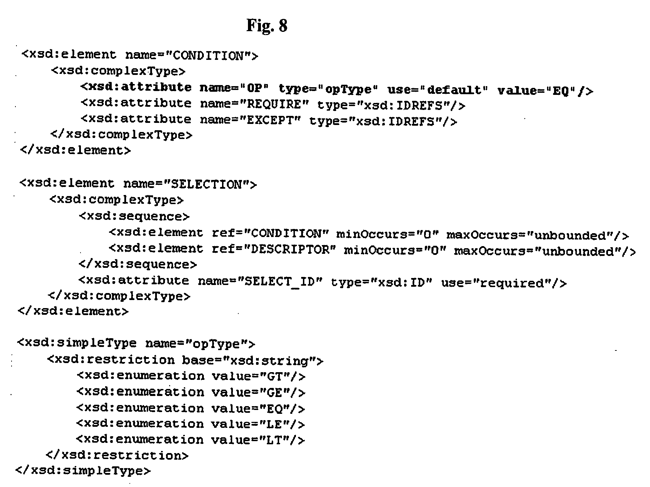

The other definition method for generating a DIGITAL ITEM is now explained with reference to Figure 8.

The CONDITION in Figure 8 is pretty similar to that of Figure 6. Here, the size of the SELECTION ID (SELECT_ID) is described within the DESCRIPTOR, one of the elements of the SELECTION.

In other words, Figure 8 illustrates a case in which XML schema definition language is described as a part of the DIGITAL ITEM definition language. In the figure, the CONDITION, being an attribute, has OP (it is typed in bold). Here, the OP can compare GT (greater than), GE (greater than or equal to), EG (equal to), LE (less than or equal to), and LT (less than). And, as described above, the size of the SELECTION ID (SELECT_ID) is described within the DESCRIPTOR, one of the elements of the SELECTION.

The CONDITION of the present invention refers to the SELECTION, and it is designated as either true or false depending on the comparison of the SELECTION the user selected with the reference list of the CONDITION. Thus it should be noted that the CONDITION is not designated as available or not available (or same/different).

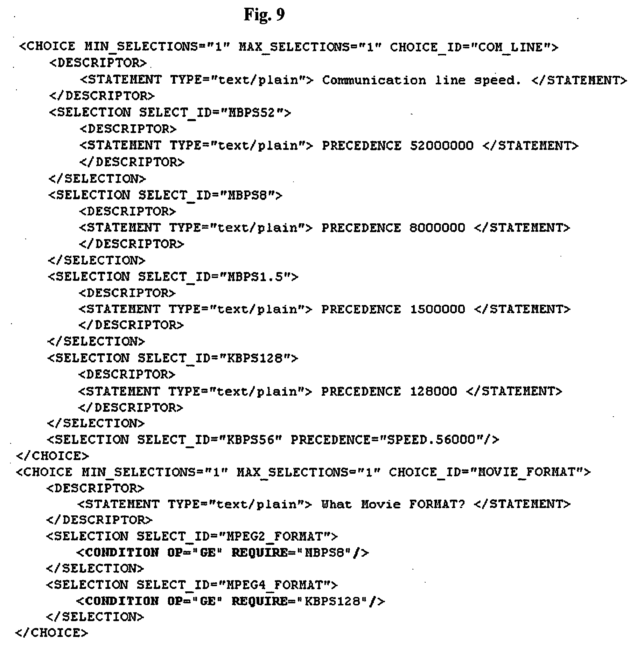

Figure 9 is a diagram illustrating an example of a DIGITAL ITEM that is generated by using the definition language introduced in the second embodiment of the CONDITION definition (Figure 8) of the present invention.

Here, the first CHOICE indicates the communication speed of the user (...CHOICE_ID="COM_LINE"), and the second CHOICE indicates the video format (...CHOICE_ID="MOVIE_FORMAT"). The size of each SELECTION ID (SELECT_ID) described in the DESCRIPTOR, an element of the SELECTION.

Since the size of the communication speed of the user in the first CHOICE is comparable with others, it is defined with the DESCRIPTOR. For instance, in case of SELECT_ID="MBPS52", the size of the SELECTION, one of the attributes of the SELECTION, is defined as ...PRECEDENCE 52000000. Similarly, in case of SELECT_ID="MBPS1.5", the size of the SELECTION is defined as PRECEDENCE 1500000.

The second CHOICE picks out the video format. To compare the CONDITION of the SELECTION, the application compares the PRECEDENCE values included in the DESCRIPTOR.

For example, if the user picked out "MBPS52", since the corresponding PRECEDENCE 52000000 is greater than 8000000 and 128000, both the MPEG2 format and the MPEG4 format can be selected.

That is to say, if ..SELECT_ID="MBPS52" is selected out of the first CHOICE, the MPEG2 format can be selected at the PRECEDENCE greater than 8000000 because of <SELECTION SELECT_ID="MPEG2_FORMAT">, and <CONDITION OP="GE" REQUIRE="MBPS8"> of the second CHOICE.

Similarly, the MPEG4 format can be selected at the PRECEDCENCE greater than 128000 because of <SELECTION SELECT_ID="MPEG4_FORMAT">, and <CONDITION OP="GE" REQUIRE="KBPS128"> of the second CHOICE.

However, if the user picked out "MBTS1.5", the corresponding PRECEDENCE 1500000 is less than 8000000, the MPEG2 format cannot be selected. In addition, since the PRECEDENCE 1500000 is greater than 128000, the MPEG4 format can be selected.

In short, because of <SELECTION SELECT_ID="MPEG2_FORMAT">, and <CONDITION OP="GE" REQUIRE="MBPS8"/>, the MPEG2 format can be selected at the PRECEDENCE greater than 8000000 only. And, because of <SELECTION SELECT_ID="MPEG4_FORMAT">, and <CONDITION OP="GE" REQUIRE="KBPS128"/>, the MPEG4 format can be selected at the PRECEDENCE greater than 128000.

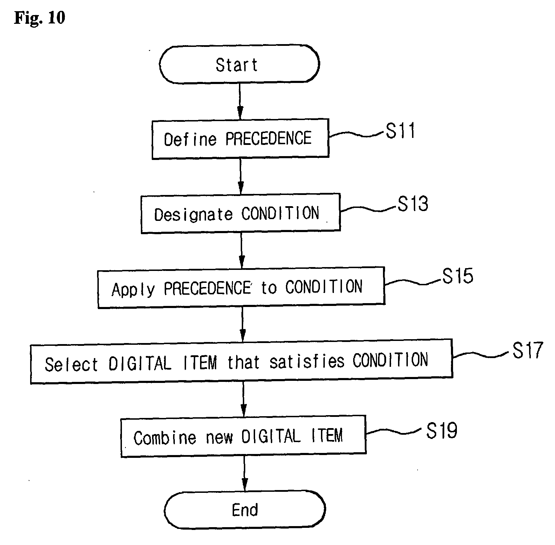

Figure 10 is a flow chart explaining a method for generating DIGITAL ITEMs in accordance with the present invention. With reference to Figure 10, the PRECEDENCE is first defined for each SELECTIONS (S11). For example, the PRECEDENCE, 'SPEED.52000000', can be defined for a certain SELECTION ID (MBPS52), and the PRECEDENCE, 'SPEED.8000000', can be defined for another SELECTION ID (MBPS8). In this manner, the PRECEDENCE corresponding to the SELECTION ID can be defined for each SELECTION.

In the meantime, the PRECEDENCE can be also defined using the DESCRIPTOR that is included in the SELECTION. Namely, the PRECEDENCE can be given to the DESCRIPTOR of each SELECTION.

Using the PRECEDENCE, the CONDITION for a comparison is set (S13). The CONDITION is set for a DIGITAL ITEM or COMPONENT, and 'OP' can be used therefore. Thus, the CONDITION can be one of GT (greater than), GE (greater than or equal to), EG (equal to), LE (less than or equal to), and LT (less than). Also, depending on the situation, more than one CONDITION can be included to the DIGITAL ITEM or COMPONENT.

In case that the user selects one of the PRECEDENCE, the selected PRECEDENCE is compared with the CONDITION (S15). That is, it is decided whether there is at least one CONDITION that satisfies the PRECEDENCE.

At the result of the comparison, one DIGITAL ITEM corresponding to the CONDITION that satisfied the PRECEDENCE is designated (S17).

Referring to Figure 7, if the user selected "MBPS1.5", since the corresponding PRECEDECE 1500000 is less than 8000000, the MPEG2 format cannot be selected. However, the PRECEDENCE 1500000 is greater than 128000, the MPEG4 format is selected instead. Here, the DIGITAL ITEM can be a COMPONENT also.

Using the above DIGITAL ITEM generation method, a new DIGITAL ITEM can be generated by combining selected DIGITAL ITEMs (S19).

In conclusion, the present invention provides a more effective method for representing the CHOICE relations included in each DIGITAL ITEM to a new DIGITAL ITEM in case of generating a new DIGITAL ITEM using already existing plural DIGITAL ITEMs.

Therefore, when the SELECTION of each DIGITAL ITEM has the identical content, the user, regardless of the number of the DIGITAL ITEMs, can make a choice only once to configure a new DIGITAL ITEM, thereby avoiding any duplicate selection. In the course of providing such convenience, the application can successfully prevent overhead, that is, making an analysis of the SELECTION included in each DIGITAL ITEM.

Further, the present invention provided a method for representing the CONDITION for the DIGITAL ITEM or the COMPONENT in order to more effectively compare the conditions of user's environment (setting), especially when the user wants to configure a new DIGITAL ITEM using a DIGITAL ITEM or COMPONENT having characteristic the user wants.

Accordingly, the method for configuring a new DIGITAL ITEM by selecting a DIGITAL ITEM or a COMPONENT using the designated CONDITION based on the PRECEDENCE of the user's choice is very useful for representing the CONDITION more effectively, and for improving the efficiency of the comparison operation. In this manner, the user is now able to generate a new DIGITAL ITEM using the DIGITAL ITEM or the COMPONENT that satisfies the designated CONDITION.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for configuring a high layer DIGITAL ITEM using a low layer DIGITAL ITEM, the method comprising the steps of:
describing an information on the low layer DIGITAL ITEM;
describing a duplicate selection item (SELECTION) among the low DIGITAL ITEM; and
describing a linking information that links the low DIGITAL ITEM.

2. The method according to claim 1, wherein the information on the low layer DIGITAL ITEM is described using a REFERENCE.

3. The method according to claim 1 or 2, further comprising the steps of:
describing the linking information together with a duplicate selection cluster (CHOICE) among the low layer DIGITAL ITEMs; and
describing the linking information together with a duplicate selection item (SELECTION) among the low layer DIGITAL ITEMs.

4. The method according to claim 3, wherein the duplicate SELECTION is described in a representative SELECTION of higher layer DIGITAL ITEM, and the duplicate CHOICE is described in a representative CHOICE of higher layer DIGITAL ITEM.

5. The method according to at least one of the preceding claims, wherein the linking information is a reference for the low layer DIGITAL ITEM (EXT_ITEM_REFS), a reference for the duplicate CHOICE of the low layer DIGITAL ITEMs (EXT_CHOICE_REFS), or a reference for the duplicate SELECTION of the low layer DIGITAL ITEMs(EXT_SELECTION_REFS).

6. The method according to at least one of the preceding claims, wherein the linking information is described using an OVERRIDE, the OVERRIDE is a combination of a low layer DIGITAL ITEM identifier and a corresponding SELECTION or a combination of a low layer DIGITAL ITEM identifier and a corresponding CHOICE.

7. A method for configuring a high layer DIGITAL ITEM using a low layer DIGITAL ITEM, the method comprising the steps of:
describing a linking information together with a duplicate CHOICE or SELECTION among low layer DIGITAL ITEMs;
defining at least one PRECEDENCE over the CHOICE or the SELECTION; and
designating at least one CONDITION for searching a corresponding DIGITAL ITEM using at least one of the PRECEDENCE.

8. The method according to claim 7, wherein the duplicate SELECTION and the linking information are described in a SELECTION of a high layer DIGITAL ITEM, and the duplicate CHOICE and the linking information are described in a CHOICE of a high layer DIGITAL ITEM.

9. The method according to claim 7 or 8, wherein the linking information is linked to a SELECTION or a CHOICE of the low layer DIGITAL ITEM, or a reference (EXT_ITEM_REFS) for referring to the low layer DIGITAL ITEM.

10. The method according to claim 9, wherein the reference (EXT_ITEM_REFS) is an identifier for the low layer DIGITAL ITEM, or an unique name of the low layer DIGITAL ITEM.

11. The method according to at least one of claims 7 to 10, wherein the linking information is a reference (EXT_CHOICE_REFS) for referring the duplicate CHOICE of the low layer DIGITAL ITEMs, or a reference (EXT_SELECTION_REFS) for referring the duplicate SELECTION of the low layer DIGITAL ITEMs.

12. The method according to at least one of claims 7 to 10, wherein the linking information is a reference (OVERRIDE) for referring to the CHOICE of the low layer DIGITAL ITEM, or a reference (OVERRIDE) for referring to the SELECTION of the low layer DIGITAL ITEM, the OVERRIDE is a combination of the DIGITAL ITEM reference (EXT_ITEM_REFS) and the SELECTION reference (EXT_SELECTION_REFS), or a combination of the DIGITAL ITEM reference (EXT_ITEM_REFS) and the CHOICE reference (EXT_CHOICE_REFS).

13. The method according to at least one of claims 7 to 12, wherein the PRECEDENCE is represented by means of a size or a number, and described in a DESCRIPTOR included in the SELECTION.

14. The method according to at least one of claims 7 to 13, wherein the CONDITION is designated as one of GT (great), GE (greater or equal), EG (equal), LE (less or equal), and LT (little).

15. A method for generating a new DIGITAL ITEM using configuration components such as a selection cluster (CHOICE), a selection item (SELECTION) and a condition (CONDITION) included in a DIGITAL ITEM, the method comprising the steps of:
defining a PRECEDENCE for each SELECTION;
comparing a PRECEDENCE selected by a user with a CONDITION included in DIGITAL ITEM or COMPONENT;
selecting an appropriate DIGITAL ITEM or COMPONENT that satisfies at least one of the CONDITIONS; and
configuring a new DIGITAL ITEM using the selected DIGITAL ITEM or COMPONENT.

16. The method according to claim 16, wherein the DIGITAL ITEM comprises a DIGITAL ITEM or a COMPONENT that is selected by the SELECTION.
